# EUROPÄISCHE PATENTANMELDUNG

(11) **EP 3 109 965 A1**
(43) Veröffentlichungstag der Anmeldung: **28.12.2016**
(21) Anmeldenummer: 16175299.3
(22) Anmeldetag: 20.06.2016
(51) Int. Cl.: H02J 3/14, G06Q 50/06

(54) **VERFAHREN ZUR STEUERUNG EINES VERBRAUCHERS**

(30) Priorität: 23.06.2015 DE 102015110029
(71) Anmelder: SMA Solar Technology AG, 34266 Niestetal (DE)
(72) Erfinder: Schropp, Bernhard, 34121 Kassel (DE); Buenemann, Mathias, 34125 Kassel (DE); Groene, Matthias, 34121 Kassel (DE)

(57) **Zusammenfassung**

Es wird ein Verfahren zur Steuerung eines Verbrauchers unter Vorgabe einer Gesamtenergieaufnahme und eines Zeitfensters zur Gesamtenergieaufnahme des Verbrauchers aus einer oder mehreren Energiequellen beschrieben, mit den Schritten eines Ermittelns von Energieblöcken (1-22), wobei die Energieblöcke (1-22) auf ein Leistungsintervall während eines Zeitintervalls bezogen sind, die Zeitintervalle innerhalb des Zeitfensters liegen und den Energieblöcken (1-22) energiequellenabhängige Kosten zugeordnet werden, eines Sortierens der Energieblöcke (1-22) aufsteigend nach der Höhe der Kosten pro Energieblock und eines nachfolgenden Aufsummierens von in den Energieblöcken (1-22) enthaltenen Energiemengen in aufsteigender Sortierung bis zum Erreichen der Gesamtenergieaufnahme des Verbrauchers. Hieraus erfolgt ein Bestimmen von An- und Ausschaltzeiten des Verbrauchers mittels der Zeitintervalle, die zu den aufsummierten Energieblöcken (1-22) gehören, wobei die zu den jeweiligen Energieblöcken (1-22) gehörenden Leistungsintervalle eine Leistungsaufnahme des Verbrauchers zum jeweiligen Zeitpunkt bestimmen, und ein Ansteuern des Verbrauchers entsprechend den An- und Ausschaltzeiten. Eine Vorrichtung zur Ausführung des Verfahrens ist ebenfalls offenbart.

## Beschreibung

Die Erfindung betrifft ein Verfahren zur Steuerung eines Verbrauchers, das den kostenoptimierten Betrieb eines Verbrauchers ermöglicht, der mit verschiedenen Leistungsaufnahmen betrieben werden kann. Dieses Optimierungsproblem eröffnet sich, wenn zum Betrieb eines solchen Verbrauchers eine Energiequelle mit differenzierender Tarifstruktur oder mehrere Energiequellen mit unterschiedlicher Tarifstruktur zur Verfügung stehen. Der numerische Aufwand zur Lösung dieses Optimierungsproblems ist insbesondere hoch, wenn eine Energiequelle mit einem fluktuierenden Angebot zur Verfügung steht, beispielsweise eine am Ort des Verbrauchers installierte Photovoltaikanlage.

Beispiele für Lasten, deren Leistungsaufnahme variiert werden kann, sind drehzahl-regulierte Wärmepumpen oder Batterieladeregler für Elektro-Autos. Heizstäbe, beispielsweise zur Warmwasserbereitung, verfügen oft über diskrete Schaltzustände ihrer Leistungsaufnahme; sie sind in ihrer Leistungsaufnahme regelbar, aber nur unter Beachtung der möglichen Leistungsstufen. Auch im industriellen Bereich existieren variable Lasten, beispielsweise drehzahl-regulierte Kompressoren für Druckluftspeicher.

Bekannte Lösungen für dieses Optimierungsproblem sind mit erheblichem numerischem Aufwand verbunden. Als Beispiel sei die DE 10 2010 042 172 A1 genannt, sie betrifft ein Verfahren zum Betreiben einer Steuerung eines Hausgerätes an einem Energieversorgungsnetz mit zugehörigem Datennetz, wobei übertragene Daten des Energieversorgungsnetzes bei gleichzeitig vorliegenden Einstelldaten des Hausgerätes zu berücksichtigen sind. Um Stellgrößen für Aktoren des Hausgerätes ermitteln zu können, ist vorgesehen, dass ein Rechner bei Ausführung seiner Verarbeitungsschritte einen Graphen-Algorithmus, beispielsweise den Dijkstra-Algorithmus, berücksichtigt.

Zur Abbildung einer regelbaren Energieaufnahme eines Verbrauchers mittels der in der DE 10 2010 042 172 A1 genannten Algorithmen müsste eine Vielzahl an Hilfsvariablen eingeführt werden, die den numerischen Aufwand immens erhöhen.

Es besteht daher Bedarf an Verfahren, die mit nur geringem numerischen Aufwand einen kostenoptimalen Betrieb eines Verbrauchers mit variabler Leistungsaufnahme ermöglichen, wenn für diese Leistungsaufnahme mehrere Energiequellen mit unterschiedlichen Tarifstrukturen und eventuell auch unterschiedlicher zeitlicher Verfügbarkeit vorhanden sind.

Es ist daher Aufgabe der vorliegenden Erfindung, ein verbessertes Verfahren zur Steuerung eines Verbrauchers mit variabler Leistungsaufnahme unter Vorgabe einer Gesamtenergieaufnahme und eines Zeitfensters zur Aufnahme der Gesamtenergieaufnahme des Verbrauchers anzugeben, wobei die Gesamtenergieaufnahme aus mehreren Energiequellen erfolgen kann.

Ein erfindungsgemäßes Verfahren ermittelt zur Lösung dieser Aufgabe Energieblöcke, wobei die Energieblöcke jeweils auf ein Leistungsintervall während eines Zeitintervalls bezogen sind. Die Zeitintervalle liegen dabei innerhalb des Zeitfensters, und den Energieblöcken werden energiequellenabhängige Kosten zugeordnet.
Unter dem Begriff Zeitintervall soll der Zeitraum zwischen dem Beginn des Intervalls, beispielsweise 10:00 Uhr, und dem Ende des Intervalls, beispielsweise 10:01 Uhr, verstanden werden, also Anfang und Ende bzw. Anfang und Breite des Intervalls. Im genannten Beispiel wäre Breite des Intervalls eine Minute, allgemein kann die Breite des Intervalls natürlich beliebig sein,
*t ... t* + Δ*t*. Unter dem Begriff Leistungsintervall während eines Zeitintervalls soll analog eine Leistung zwischen einer unteren Leistungshöhe, beispielsweise 700 W, und einer oberen Leistungshöhe, beispielsweise 1000 W, verstanden werden. In diesem Beispiel wäre die Leistung des Leistungsintervalls 300 W (Watt), wobei diese Leistung während des zugehörigen Zeitintervalls zur Verfügung stehen, bzw. verbraucht werden soll. In unserem Beispiel ergibt sich der Energieinhalt des zugehörigen Energieblockes zu 300 W x (1/60 h) = 5 Wh.
Dem Energieblock werden nun Kosten zugeordnet, diese sind abhängig von der sie erzeugenden Energiequelle, zusätzlich können die Kosten auch eine Zeitabhängigkeit aufweisen, wie beispielsweise von Nachtstromtarifen bekannt, in diesem Falle werden die Kosten auch auf das zugrundliegende Zeitintervall bezogen.

Anschließend werden die Energieblöcke aufsteigend nach der Höhe der Kosten pro Energieblock sortiert, das heißt, zunächst sollen die Energieblöcke mit dem niedrigsten Preis zum Verbrauch in Betracht gezogen werden. In aufsteigender preislicher Sortierung werden die in den Energieblöcken enthaltenen Energiemengen aufsummiert, bis eine Energiemenge erreicht ist, die der Gesamtenergieaufnahme des Verbrauchers entspricht.

Aus den zu den aufsummierten Energieblöcken gehörenden Zeitintervallen werden die An- und Ausschaltzeiten des Verbrauchers bestimmt, wobei die zu den jeweiligen Energieblöcken gehörenden Leistungsintervalle eine Leistungsaufnahme des Verbrauchers zum jeweiligen Zeitpunkt bestimmen und der Verbraucher kann entsprechend angesteuert werden. Würde der Energieblock in oben erwähntem Beispiel zu dieser Summe von Energieblöcken gehören, die zur Versorgung des Verbrauchers auf diese Weise ausgewählt werden, so würde um 10:00 Uhr der Verbraucher von einer Leistungsaufnahme von 700 W auf 1000 W geschaltet werden. Dies würde -im Beispiel- für mindestens eine Minute lang geschehen. Danach würde sich ein weiterer Energieblock anschließen, was je nach zugehörigem Leistungsintervall ein Gleichbleiben, eine Reduzierung oder eine weitere Steigerung der Leistungsaufnahme bedeuten kann. Schließt sich kein ausgewählter Energieblock an den vorhergehenden unmittelbar an, wird der Verbraucher ausgeschaltet.
Das erfindungsgemäße Verfahren findet durch die beschriebene Sortierung und Auswahl der Energieblöcke ohne großen Rechenaufwand zu einem Plan für die Steuerung des Verbrauchers, der mit dem geringsten Preis für die gewünschte Energieaufnahme verbunden ist.

Für Verbraucher mit diskreten Leistungsaufnahme-Stufen bestimmen in einer vorteilhaften Ausgestaltung diese diskreten Leistungsaufnahme-Stufen die Leistungsintervalle. So würde beispielsweise ein Warmwasser-Heizer mit drei Heizstäben mit je 500 W Leistungsaufnahme nur in Leistungsaufnahme-Stufen von 500 W, 1000 W oder 1500 W betreibbar sein. In diesem Falle müsste die Höhe der Leistungsintervalle der Energieblöcke ebenfalls 500 W betragen.

In einer weiteren vorteilhaften Ausführungsform wird zumindest ein Teil der Energie zum Betrieb des Verbrauchers von einer erneuerbaren Energiequelle, besonders bevorzugt einem Photovoltaikgenerator, bezogen. Da die Energieabgabe dieser Energiequellen zeitlich stark variieren kann, kann deren Verfügbarkeit für einen Zeitpunkt in der Zukunft nur mithilfe einer Prognose bestimmt werden. Daher wird die Menge an Energieblöcken, die von mindestens einer erneuerbaren Energiequelle bezogen werden kann, unter Verwendung einer Prognose bestimmt.

Bei Verbrauchern mit kontinuierlicher variierbarer Leistungsaufnahme werden in einer weiteren vorteilhaften Ausführungsform die Leistungsintervalle durch eine Leistung der erneuerbaren Energiequelle in dem zugehörigen Zeitintervall bestimmt. Aus einer Prognose kann eine Leistungshöhe der erneuerbaren Energiequelle zu einem gegebenen Zeitpunkt abgeleitet werden. Das vorgegebene Zeitfenster wird in Zeitintervalle unterteilt, diesen können dann die zugehörigen Leistungsintervalle zugeordnet werden.

Üblicherweise versorgen erneuerbare Energiequellen nicht nur lokale Verbraucher, sondern speisen auch in ein vorhandenes Energienetz ein. Das fluktuierende Angebot an erneuerbarer Energie in den Netzen kann aber auch die Stabilität der Netze beeinträchtigen. Deshalb kommen immer häufiger Einspeiseobergrenzen zur Anwendung, was bedeutet, dass es eine Obergrenze gibt, bis zur der eine erneuerbare Energiequellen in das Netz einspeisen darf. Kann die erneuerbare Energiequelle mehr Energie abgeben, muss der Generator abgeregelt werden oder die überschüssige Energie muss lokal verbraucht werden.
Bei einer besonders vorteilhaften Ausführungsform des erfindungsgemäßen Verfahrens werden diejenigen Energieblöcke mit den niedrigsten Kosten belegt, die von der mindestens einen erneuerbaren Energiequelle bezogen werden können und die entsprechend der Prognose die Einspeiseobergrenze überschreiten.

In einer vorteilhaften Ausführungsform des erfindungsgemäßen Verfahrens werden die Zeitintervalle als gleichgroße Teile des Zeitfensters bestimmt.

Sollen mehrere Verbraucher mittels des erfindungsgemäßen Verfahrens betrieben werden, so kann das erfindungsgemäße Verfahren für die verschiedenen Verbraucher nacheinander durchgeführt werden, wobei dann der Verbraucher für den das erfindungsgemäße Verfahren zuerst durchgeführt wird am kostengünstigsten betrieben werden kann. Das erfindungsgemäße Verfahren kann aber auch in iterativen Schleifen abwechselnd für die verschiedenen Verbraucher durchlaufen werden, um dabei zu einem Kostenminimum für alle Verbraucher zu gelangen.

In einer weiteren vorteilhaften Ausführungsform werden die Kosten der Energieblöcke unter Berücksichtigung der Umweltfolgekosten der sie erzeugenden Energieerzeuger bestimmt. So kann für den Bezug von Energie aus dem Verbundnetz statt des tatsächlich zu zahlenden Bezugstarifes auch angenommene oder hochgerechnete Umweltfolgekosten für diese Energieblöcke zugrunde gelegt werden. In diesem Falle würde für Energie, die aus dem Verbundnetz bezogen wird, die durch eine Wasserkraftanlage erzeugt wird, andere Kosten angesetzt werden als für Energie, die in Kohlekraftwerken erzeugt wurde. Oft wird dies in der Praxis schwierig sein, da die Quelle der Energie im Verbundnetz nicht sicher bekannt ist. Es soll hier lediglich klargestellt werden, dass "Kosten" hier als abstrakter Begriff zu verstehen ist, der je nach gewünschter Zielrichtung unterschiedlich gefüllt werden kann.

Eine erfindungsgemäße Vorrichtung zur Durchführung des erfindungsgemäßen Verfahrens zur Steuerung eines Verbrauchers umfasst eine erste Schnittstelle zur Ausgabe von Steuerbefehlen an den Verbraucher. Diese Steuerbefehle können Signale zum An- und Ausschalten des Verbrauchers unter Auswahl einer bestimmten Leistungsaufnahme beinhalten. Ferner umfasst die erfindungsgemäße Vorrichtung eine zweite Schnittstelle zum Empfang von Betriebsdaten mindestens einer erneuerbaren Energiequelle und zum Senden von Steuerbefehlen an die erneuerbare Energiequelle. Betriebsdaten können Leistungsdaten der erneuerbaren Energiequelle sein, beispielsweise die zurzeit eingespeiste Leistung oder die maximal zur Verfügung stehende Leistung. Mit diesen Daten kann die mittels des erfindungsgemäßen Verfahrens geplante Verbrauchersteuerung entsprechend der aktuell verfügbaren Leistung nachjustiert werden. Steuerbefehle, die an die erneuerbare Energiequelle gesendet werden, können Soll-Leistungsdaten enthalten. Um die wegen einer Einspeiseobergrenze abzuregelnde Energie zu nutzen, wird beispielsweise der Steuerbefehl ausgegeben, die maximal zur Verfügung stehende Energie abzugeben. Gleichzeitig muss die erfindungsgemäße Vorrichtung dafür Sorge tragen, dass der Verbraucher die abzuregelnde Energie verbraucht, indem an den Verbraucher die entsprechenden Steuerbefehle ausgegeben werden.

Die oben erwähnten Schnittstellen können durch eine Funkverbindung hergestellt sein oder irgendeine Form von drahtgebundener Kommunikation realisiert werden. Des Weiteren weist die erfindungsgemäße Vorrichtung eine dritte Schnittstelle zum Empfang einer Prognose auf, mittels der eine Menge an Energieblöcken, die von der erneuerbaren Energiequelle bezogen werden kann, bestimmt werden kann. Diese Schnittstelle kann durch eine Internetverbindung realisiert werden und kann ebenfalls funkgestützt oder drahtgebunden bereitgestellt werden. Auch ist es möglich, von extern beispielsweise nur Wetterdaten zu beziehen und die Prognose für die betreffende erneuerbare Energiequelle in der erfindungsgemäßen Vorrichtung selbst zu generieren. Darüber hinaus ist es denkbar, die erfindungsgemäße Vorrichtung in das Gehäuse eines Anlagenteils der erneuerbaren Energiequelle, beispielsweise den Wechselrichter einer Photovoltaikanlage, zu integrieren. In diesem Falle wäre die zweite Schnittstelle eine geräteinterne Schnittstelle von der Steuerung des Wechselrichters zu der erfindungsgemäßen Vorrichtung. Ist der Wechselrichter zudem bereits mit dem Internet verbunden, könnte eine Prognose oder Wetterdaten ebenfalls über diese zweite, geräteinterne Schnittstelle an die erfindungsgemäße Vorrichtung gesendet werden.

Im Folgenden wird die Erfindung mit Hilfe von Figuren näher erläutert.

Die Figuren zeigen:
- Figur 1: zeigt eine schematische Darstellung von Energieblöcken, die mittels einer Variante des erfindungsgemäßen Verfahrens sortiert wurden
- Figur 2: zeigt eine schematische Darstellung von Energieblöcken, die mittels einer weiteren Variante des erfindungsgemäßen Verfahrens sortiert wurden

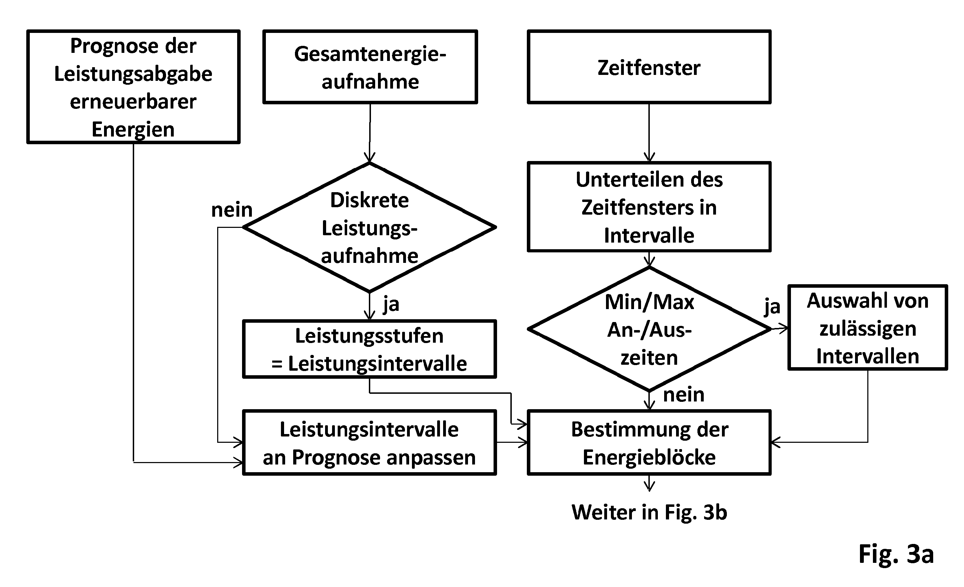

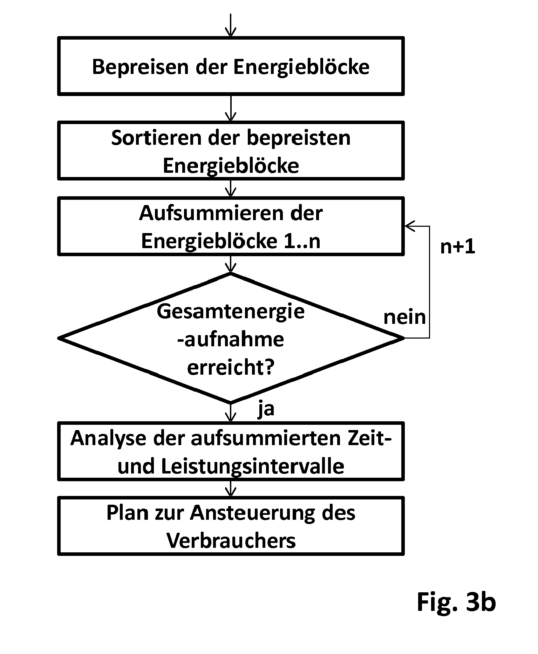

- Figuren 3a, 3b: zeigen als Teilfiguren gemeinsam eine schematische Darstellung einer Ausführungsform des erfindungsgemäßen Verfahrens

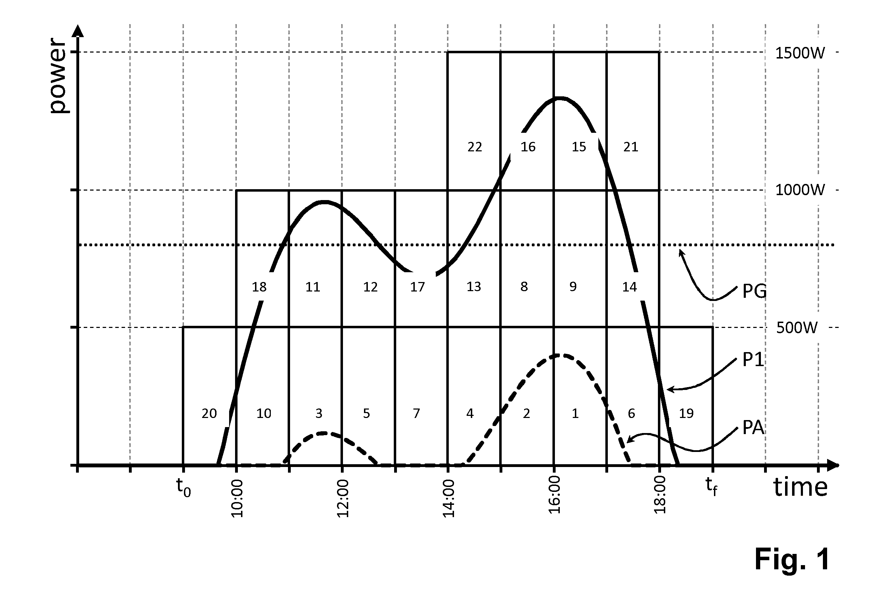

In Figur 1 ist die Leistung über der Zeit aufgetragen, die sich ergebende Fläche Leistung-mal-Zeit stellt demnach die Energie dar.
Auf der Zeitachse ist von t₀ bis t_{F} das vorgegebene Zeitfenster zur Aufnahme der Gesamtenergieaufnahme des Verbrauchers aufgetragen. Die Angabe des Zeitfensters und der Gesamtenergieaufnahme wird in der Regel der Besitzer bzw. Benutzer des Verbrauchers vornehmen. Beispielsweise könnte ein Benutzer vorgeben, dass ein Warmwasser-Heizer im Zeitraum zwischen 9:00 Uhr und 19:00 Uhr insgesamt 2000 Wh an Energie an ein Warmwasserreservoir abgeben soll. Das Zeitfenster zwischen 9:00 Uhr und 19:00 Uhr wird dann die Grundlage für die Berechnung der in Frage kommenden Zeitintervalle darstellen.

In diesem Beispiel soll am Ort des Verbrauchers eine Photovoltaikanlage zur Verfügung stehen und die von dieser Photovoltaikanlage innerhalb des Zeitfensters beziehbare Leistung wird unter Verwendung einer Prognose bestimmt. In diese Prognose können diverse Parameter eingehen, beispielsweise die Wetterprognose eines Wetterdienstes, Leistungsdaten derselben Photovoltaikanlage aus vorangegangenen Zeiträumen oder Leistungsdaten anderer Photovoltaikanlagen. Diese prognostizierte Leistung P1 der lokal vorhandenen Photovoltaikanlage ist im Diagramm mit einer durchgezogenen Linie gekennzeichnet.

Ist am Ort des Verbrauchers auch ein Verbundnetz vorhanden, so kann Energie sowohl von der Photovoltaikanlage als auch aus dem Verbundnetz bezogen werden. Umgekehrt kann die von der Photovoltaikanlage erzeugte Energie vor Ort verbraucht werden als auch in das Verbundnetz eingespeist werden. Denkbar ist aber auch, dass der Verbraucher Energie aus einem lokalen Inselnetz bezieht in das mehrere unterschiedliche Energiequellen einspeisen, beispielsweise eine Biogasanlage, eine Wasserkraftanlage, eine Windkraftanlage und ein Dieselgenerator. Für all diese Energiequellen lassen sich unterschiedliche Gestehungskosten für die jeweils von diesen bereitgestellte elektrische Energie berechnen. Diese können für die das erfindungsgemäße Verfahren herangezogen werden.

Viele Verbundnetze geben für einspeisende, stark variierende Energiequellen inzwischen Einspeiseobergrenzen vor. Im Diagramm ist eine Einspeiseobergrenze (P_{G}) mit einer waagrechten Linie bei 800 W gekennzeichnet. Der Teil der prognostizierten Photovoltaikleistung oberhalb dieser Einspeiseobergrenze P_{G} ist mit einer gestrichelten Linie (P_{A}) gekennzeichnet. Legt man für die einspeisbare Energie den jeweiligen Einspeisetarif zugrunde, kann man für die nicht einspeisbare Photovoltaikleistung P_{A}, die entweder abgeregelt oder verbraucht werden muss, Kosten von 0 ct/kWh annehmen. Da diese Energie zuerst verbraucht werden sollte, wurde die nicht einspeisbare Photovoltaikleistung P_{A} der suggestiveren Darstellung halber im Diagramm nach unten verschoben.

Im Beispiel soll der Warmwasser-Heizer drei Heizstäbe mit je 500 W Leistungsaufnahme aufweisen, woraus resultiert, dass der Heizer nur in Leistungsaufnahme-Stufen von 500 W, 1000 W oder 1500 W betreibbar ist. Diese Leistungsaufnahme-Stufen bestimmen die Höhe der Leistungsintervalle, im Diagramm durch waagerechte Konturen angedeutet. Teilt man das Zeitfenster in Stundenintervalle auf, so ergeben sich die darstellten 22 Energieblöcke mit jeweils 500 Wh Energieinhalt, im Diagramm in Form einer Gitterkontur erkennbar. Natürlich wird man in der Praxis eine deutlich feinere zeitliche Unterteilung vornehmen, Zeitintervalle von Minuten oder auch Sekunden sind denkbar.

Im Beispiel wird die Kostenzuordnung folgendermaßen vorgenommen:
- Energie unterhalb der Linie (P_{A}) werden von 0 ct/kWh zugeordnet;
- Energie oberhalb der Linie (P_{A}) aber unterhalb der Linie (P₁) wird der Einspeisetarif als Kosten zugeordnet;
- Energie oberhalb der Linie (P₁) wird Bezugstarif des Verbundnetzes als Kosten zugeordnet.

Wobei angenommen wird, dass die Kosten Bezugstarifes des Verbundnetzes höher liegen als die des Einspeisetarifes.

Natürlich kann man je nach gewünschtem Effekt andere Kosten zuordnen, beispielsweise die jeweiligen Umweltfolgekosten, die sich aus der Produktion der Energieerzeugungsanlage und deren Betrieb ergeben. Je nach Kostenzuordnung ergibt sich dann eine andere Reihenfolge der Energieblöcke.

Den im Diagramm dargestellten 22 Energieblöcken werden Kosten wie oben angedeutet zugeordnet. Wenn ein Energieblock von keiner Tarif-Linie durchschnitten wird, wie der Block mit Nummer 7, können ihm Kosten wie oben beschrieben zugeordnet werden, hier der Einspeisetarif mit beispielsweise 10 ct/kWh. Dem Block 7 werden also Kosten von 0,5 kWh x 10 ct/kWh = 5 ct zugeordnet.
Verläuft eine Tarifgrenze durch den Energieblock, wie bei Block Nummer 1, werden die Kosten entsprechend des Flächenverhältnisses zugeordnet. Bei Block Nummer 1 liegen ca. 2/3 Fläche im abgeregelten Bereich, das heißt es wird 0 ct/kWh zugordnet und 1/3 liegt im 10 ct/kWh Bereich. So wird hier ein Mischtarif von (2/3 X 0,5 kWh x 0 ct/kWh) + (1/3 x 0,5 kWh x 10 ct/kWh) = 1,7 ct zugeordnet werden.

Die Energieblöcke werden nun nach den ihnen zugeordneten Kosten sortiert, beginnend mit den niedrigsten Kosten in aufsteigender Reihenfolge. Die sich in diesem Beispiel ergebende Reihenfolge ist im Diagramm durch die Nummerierung der Energieblöcke kenntlich gemacht.
In dieser Reihenfolge werden die in den Energieblöcken enthaltenen Energiemengen aufsummiert bis zum Erreichen der vorgegebenen Gesamtenergieaufnahme des Verbrauchers. In unserem Beispiel sollte der Warmwasser-Heizer insgesamt 2 kWh verbrauchen. Durch Summation der 0,5 kWh "Portionen" der Energieblöcke 1, 2, 3 und 4 werden insgesamt 2 kWh erreicht.

Die Energieblöcke 1, 2, 3 und 4 bestimmen nun die An- und Ausschaltzeiten des Verbrauchers. Energieblock 3 bestimmt den Einschaltzeitpunkt um 11:00 Uhr, das heißt um 11:00 Uhr wird der Heizer mit 500 W Leistungsaufnahme für eine Stunde eingeschaltet, um 12:00 Uhr wird er ausgeschaltet. Um 14:00 Uhr (Beginn Energieblock 4) wird der Heizer wieder mit 500 W Leistungsaufnahme eingeschaltet und um 17:00 Uhr (Ende Energieblock 1) ausgeschaltet.

Würde eine Gesamtenergieaufnahme des Verbrauchers von 4 kWh in selben Zeitfenster vorgegeben, würden die Energieblöcke 1-8 zur Energieaufnahme benötigt. In diesem Fall würde um 15:00 Uhr (Beginn Energieblock 8) die Leistungsaufnahme von 500 W auf 1000 W geschaltet. So bestimmt das zugehörige Leistungsintervall der Energieblöcke die Leistungsaufnahme des Verbrauchers zum jeweiligen Zeitpunkt.

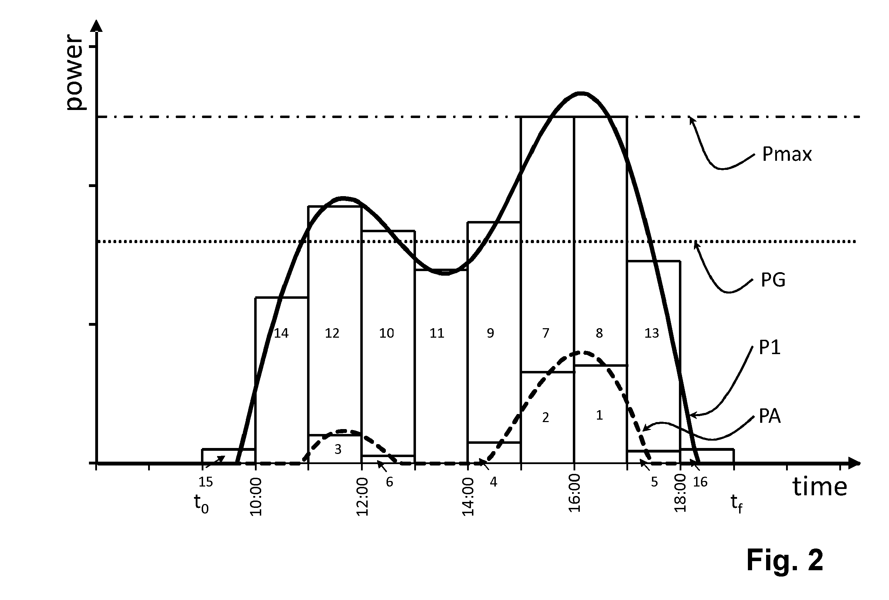

Figur 2 zeigt ähnliches wie Figur 1, nur soll abweichend hier ein Verbraucher angesteuert werden, der eine kontinuierlich variierbare Leistungsaufnahme zulässt. Als Beispiel kann ein Kompressor dienen, dessen Drehzahl sich kontinuierlich regeln lässt. Mit Pₘₐₓ ist in Figur 2 die maximale Leistungsaufnahme des Verbrauchers angegeben. Bezugszeichen, die auch schon in Figur 1 verwendet wurden, werden hier ganz analog verwendet.

Auf der Zeitachse ist wieder von t₀ bis t_{F} das vorgegebene Zeitfenster zur Aufnahme der Gesamtenergieaufnahme des Verbrauchers aufgetragen, als Zeitintervalle werden wieder Stunden angenommen. In diesem Beispiel sind die Höhen der Leistungsintervalle aber nicht durch den Verbraucher vorgegeben, sie werden durch die Leistung der erneuerbaren Energiequelle in dem zugehörigen Zeitintervall bestimmt. Diese Leistung der erneuerbaren Energiequelle wird, wie oben beschrieben, unter Verwendung einer Prognose bestimmt, auch die Kostenstruktur wird angenommen wie oben zu Figur 1 beschrieben. Die maximale Leistungsaufnahme des Verbrauchers Pₘₐₓ stellt die obere Grenze aller möglichen Leistungsintervalle dar.

Die Höhe der Leistungsintervalle wird in diesem Beispiel durch den Stundenmittelwert der Leistung der Photovoltaikanlage bestimmt. In der Praxis würde man natürlich wesentlich kürzere Zeitintervalle wählen und sich dadurch mit den Leistungsintervallen viel genauer an die Prognosekurve annähern können.
Es ergeben sich unterschiedlich hohe Leistungsintervalle.

Wie auch in Figur 1 soll hier zunächst der Teil der Energie verbraucht werden, der nicht eingespeist werden kann, ebenfalls mit einer gestrichelten Linie (P_{A}) dargestellt. Diesen Energieblöcken werden die niedrigsten Kosten zugeordnet, dies sind in diesem Beispiel die Energieblöcke 1 bis 6. Den übrigen nummerierten Energieblöcken wird der Einspeisetarif zugeordnet. Sind diese nicht ausreichend für die vorgegebene Gesamtenergieaufnahme des Verbrauchers, wird die restliche Energie aus dem Verbundnetz zum Bezugstarif bezogen.

Da in diesem Beispiel die Energieblöcke nicht gleich groß sind, muss, um eine Vergleichbarkeit der Preise wieder herzustellen, mit relativen Preisen gearbeitet werden. Das heißt, es wird mit einem Preis pro kWh gearbeitet, so dass der Preis auf eine einheitliche Energieblockgröße normiert ist.

In den Energieblöcken sind folgende Energiemengen enthalten:
Block 1 - 350 Wh, Block 2 - 300 Wh, Block 3 - 100 Wh, Block 4 - 70 Wh, Block 5 - 50 Wh, Block 6 - 30 Wh, Block 7 - 1250 Wh, Block 8 - 1200 Wh, Block 9 - 950 Wh usw. Die Energieblöcke 1-6 enthalten zusammen 900 Wh, der relative Preis der Blöcke ist jeweils gleich, er wird in diesem Beispiel mit 0 ct/kWh angenommen. In welcher Reihenfolge diese nun aufsummiert werden ist beliebig. Randbedingungen, wie möglichst häufiges Schalten zu vermeiden oder die Angabe einer Mindestlaufzeit eines Verbrauchers, kann zur Auswahl von zusammenhängenden Zeitintervallen führen. Man kann -wie in hier gezeigten Beispiel- auch nach dem Energieinhalt (Größe) der Blöcke sortieren.

Den Energieblöcken 7 bis 14 wird der Einspeisetarif mit 10 ct/kWh zugeordnet, weiteren möglichen Energieblöcken der Bezugstarif des Verbundnetzes
Soll ein Warmwasser-Heizer im Zeitraum zwischen 9:00 Uhr und 19:00 Uhr insgesamt 2000 Wh an Energie an ein Warmwasserreservoir abgeben, wie auch im Beispiel zu Figur 1, würden die Energieblöcke 1 bis 7 aufsummiert (Summe: 2150 Wh). Es ergibt sich so folgender Plan zur Ansteuerung des Verbrauchers: um 11:00 Uhr wird mit einer Leistungsaufnahme von 100 W eingeschaltet (beginn Block 3), um 12:00 Uhr auf 30 W gedrosselt (Block 6), 13:00 Uhr wird ausgeschaltet. Um 14:00 Uhr wird mit 70 W wieder eingeschaltet (Block 4), um 15:00 Uhr wird die Leistungsaufnahme 300+1250=1550 W (Blöcke 2 und 7 - was in diesem Beispiel auch die maximale Leistungsaufnahme des Verbrauchers darstellen soll), um 16:00 Uhr wird die Leistungsaufnahme auf 350 W gedrosselt (Block 1), um 17:00 Uhr wird auf 50 W gedrosselt, um 18:00 Uhr wird abgeschaltet.

Sollen vom Verbraucher 4 kWh aufgenommen werden, würden die Blöcke 1 bis 9 aufsummiert (Summe 4300 Wh). In diesem Fall zunächst wie oben beschrieben begonnen werden, um 14:00 Uhr würde die Leistungsaufnahme auf 70+950=1020 W (Blöcke 4 und 9) geschaltet werden, um 15:00 Uhr auf 1550 W (wie oben) dies Leistungsaufnahme würde dann bis 17:00 Uhr bestehen bleiben (Blöcke 1 und 8), danach würde der Verbraucher weiter wie oben beschrieben angesteuert.

Durch sehr viel kürzere Zeitintervalle als die hier beispielhaft gezeigten Stundenintervalle ist eine genauere Erreichung der Gesamtenergieaufnahme möglich.

Eine Ausführungsform des erfindungsgemäßen Verfahrens in Form eines schematischen Ablaufdiagrammes ist in zwei Teilfiguren 3a und 3b aufgeteilt, die im Folgenden gemeinsam beschrieben werden. Als Eingabe werden in diesem Beispiel die "Prognose der Leistungsabgabe erneuerbarer Energien", die Angabe von "Gesamtenergieaufnahme" und "Zeitfenster" benötigt. Die Angabe von der Gesamtenergieaufnahme des Verbrauchers, so wie das Zeitfenster in dem diese erfolgen soll, wird meist ein Besitzer/Benutzer des Verbrauchers vornehmen, in einem Industriebetrieb wird sie möglicherweise durch interne Abläufe vorgegeben sein. Die "Prognose der Leistungsabgabe erneuerbarer Energien" kann durch einen externen Dienstanbieter beigesteuert werden. Bevorzugt wird es sich bei der zugrunde liegenden erneuerbaren Energiequelle um eine am Ort des Verbrauchers vorhandene, in Eigenregie betriebene Quelle handeln, beispielsweise um eine auf dem Dach des Industriebetriebes installierte Photovoltaikanlage.
Je nachdem ob es sich um einen Verbraucher mit kontinuierlicher Leistungsaufnahme handelt oder ob die Leistungsaufnahme nur in diskreten Leistungsstufen erfolgen kann (Abfrage "Diskrete Leistungsaufnahme") werden die Leistungsintervalle auf unterschiedliche Weise gebildet. Falls die Leistungsaufnahme nur in diskreten Leistungsstufen erfolgen kann ("Diskrete Leistungsaufnahme: ja") orientieren sich die Leistungsintervalle an den Leistungsstufen (siehe Figur 1). Kann die Leistungsaufnahme kontinuierlich erfolgen ("Diskrete Leistungsaufnahme: nein") werden die Leistungsintervalle möglichst gut an die prognostizierte Leistung P1 zu dem gegebenen Zeitpunkt angepasst (siehe auch Figur 2).
Das Zeitfenster wird in beispielsweise gleichgroße Teile unterteilt, die dann die Zeitintervalle bilden. Die Zeitintervalle mit den zugehörigen Leistungsintervallen bilden zusammen die Energieblöcke (siehe auch Figuren 1 und 2).

Mitunter existieren Einschränkungen bezüglich der Unterbrechbarkeit eines Verbrauchers, so ist es meist nicht gewünscht, dass Geräte sehr schnell an- und wieder ausgeschaltet werden, da dies zu höherem Verschleiß führen kann. Diese Randbedingung wird durch die Abfrage "Min/Max An-/ Auszeiten" symbolisiert. Die Angabe von minimalen bzw. maximalen Anschalt- und/oder Ausschaltzeiträumen führt dazu, dass nicht alle Intervalle des Zeitfensters für die Verbrauchersteuerung herangezogen werden können ("Min/Max An-/ Auszeiten: ja"). Bekannte stochastische Verfahren, wie beispielsweise das "simulated annealing"-Verfahren können in diesem Fall Vorschläge von zulässigen Zeitintervallen bereitstellen und nur für diese werden dann vom erfindungsgemäßen Verfahren Energieblöcke bestimmt. Unter Rückkopplung der sich am Ende ergebenden Kosten (nicht gezeigt), kann das stochastische Verfahren zu weiteren Iterationsschritten angeregt werden.
Liegen keinerlei Einschränkungen bezüglich der Anschalt- und/oder Ausschaltzeiträumen zu dem Verbraucher vor ("Min/Max An-/ Auszeiten: nein"), werden alle sich aus dem Zeitfenster ergebenden Zeitintervalle für die Konstruktion der Energieblöcke herangezogen.

Unter "Bestimmung der Energieblöcke" werden die zueinander gehörenden Leistungs- und Zeitintervalle zu Energieblöcken zusammengefügt. Diese Energieblöcke werden mit Preisen versehen, die von der Energiequelle abhängig sind ("Bepreisen der Energieblöcke"). Zusätzlich können die Preise von weiteren Parametern abhängig sein.

Die bepreisten Energieblöcke werden nun in aufsteigender Reihenfolge ihrer Preise sortiert ("Sortieren der bepreisten Energieblöcke") und in dieser Reihenfolge aufsummiert ("Aufsummieren der Energieblöcke 1...n") bis die Gesamtenergieaufnahme des Verbrauchers erreicht ist ("Gesamtenergieaufnahme erreicht?: ja").

Die beim vorherigen Schritt durch Aufnahme in die Summe ausgewählten Energieblöcke werden hinsichtlich der zu ihnen gehörenden Leistungs- und Zeitintervalle betrachtet ("Analyse der aufsummierten Zeit- und Leistungsintervalle"). So führt der Beginn des Zeitintervalls des ersten Energieblockes zum ersten Einschaltzeitpunkt des Verbrauchers und das zugehörige Leistungsintervall zu der zu diesem Zeitpunkt anzusteuernden Leistungsaufnahme. Im Zeitverlauf voranschreitend werden so aus den ausgewählten Energieblöcken, Schaltzeitpunkte und zugehörige Leistung ermittelt, was als "Plan zur Ansteuerung des Verbrauchers" dient und die im Rahmen des vorbeschriebenen Verfahrens bestimmte kostengünstigste Möglichkeit des Betriebes des Verbrauchers darstellt.

### Bezugszeichenliste

- P₁: prognostizierte Leistung
- P_{A}: nicht einspeisbare Photovoltaikleistung
- P_{G}: Einspeiseobergrenze
- Pₘₐₓ: Maximale Leistungsaufnahme
- 1 - 22: Energieblöcke

## Patentansprüche

1. Verfahren zur Steuerung eines Verbrauchers unter Vorgabe einer Gesamtenergieaufnahme und eines Zeitfensters zur Gesamtenergieaufnahme des Verbrauchers aus einer oder mehreren Energiequellen, umfassend folgende Schritte:
• Ermitteln von Energieblöcken (1-22), wobei die Energieblöcke (1-22) auf ein Leistungsintervall während eines Zeitintervalls bezogen sind, und wobei die Zeitintervalle innerhalb des Zeitfensters liegen, und wobei den Energieblöcken (1-22) energiequellenabhängige Kosten zugeordnet werden,
• Sortieren der Energieblöcke (1-22) aufsteigend nach der Höhe der Kosten pro Energieblock,
• Aufsummieren von in den Energieblöcken (1-22) enthaltenen Energiemengen in aufsteigender Sortierung bis zum Erreichen der Gesamtenergieaufnahme des Verbrauchers und
• Bestimmen von An- und Ausschaltzeiten des Verbrauchers mittels der Zeitintervalle, die zu den aufsummierten Energieblöcken (1-22) gehören, wobei die zu den jeweiligen Energieblöcken (1-22) gehörenden Leistungsintervalle eine Leistungsaufnahme des Verbrauchers zum jeweiligen Zeitpunkt bestimmen, und
• Ansteuern des Verbrauchers entsprechend den An- und Ausschaltzeiten.

2. Verfahren nach Anspruch 1, wobei bei Verbrauchern mit diskreten Leistungsaufnahme-Stufen diese die Leistungsintervalle bestimmen.

3. Verfahren nach Anspruch 1 oder 2, wobei eine Menge an Energieblöcken (1-22), die von mindestens einer erneuerbaren Energiequelle bezogen werden kann, unter Verwendung einer Prognose bestimmt wird.

4. Verfahren nach Anspruch 3, wobei bei Verbrauchern mit kontinuierlicher, variabler Leistungsaufnahme die Leistungsintervalle durch eine Leistung der erneuerbaren Energiequelle in dem zugehörigen Zeitintervall bestimmt werden.

5. Verfahren nach Anspruch 3, wobei bei Anwendung einer Einspeiseobergrenze (P_{G}) die Energieblöcke mit den niedrigsten Kosten belegt werden, die von der mindestens einen erneuerbaren Energiequelle bezogen werden können und die entsprechend der Prognose die Einspeiseobergrenze (P_{G}) überschreiten.

6. Verfahren nach einem der vorangehenden Ansprüche, wobei die Kosten der Energieblöcke (1-22) unter Berücksichtigung der Umweltfolgekosten der sie erzeugenden Energieerzeuger bestimmt werden.

7. Verfahren nach einem der vorangehenden Ansprüche, wobei die Zeitintervalle als gleichgroße Teile des Zeitfensters bestimmt werden.

8. Vorrichtung zur Steuerung eines Verbrauchers umfassend
• eine erste Schnittstelle zur Ausgabe von Steuerbefehlen an den Verbraucher,
• eine zweite Schnittstelle zum Empfang von Betriebsdaten mindestens einer erneuerbaren Energiequelle und zum Senden von Steuerbefehlen an die erneuerbare Energiequelle,
• eine dritte Schnittstelle zum Empfang einer Prognose mittels der eine Menge an Energieblöcken (1-22), die von der erneuerbaren Energiequelle bezogen werden kann, bestimmt werden kann oder zum Empfang von Daten zur Erstellung einer Prognose
wobei die Vorrichtung eingerichtet ist, ein Verfahren nach den Ansprüchen 1 bis 7 auszuführen.
